# EUROPEAN PATENT SPECIFICATION

(11) **EP 3 187 300 B1**
(45) Date of publication and mention of the grant of the patent: **08.05.2019**
(21) Application number: 16207342.3
(22) Date of filing: 29.12.2016
(51) Int. Cl.: B23Q 1/54, B23Q 16/02

(54) **TILTING TABLE FOR MACHINING CENTER**
SCHWENKTISCH FÜR BEARBEITUNGSZENTRUM
TABLE DE BASCULEMENT POUR CENTRE D'USINAGE

(30) Priority: 31.12.2015 KR 20150190766
(43) Date of publication of application: 05.07.2017
(73) Proprietor: Hyundai Wia Corporation, Changwon-si, Gyeongsangnam-do 51533 (KR)
(72) Inventor: LEE, Dal Ho, 06691 Seoul (KR)
(74) Representative: Krauns, Christian

(56) References cited:
- EP-A1- 1 882 544
- EP-A1- 2 347 854
- KR-B1- 101 547 760
- US-A1- 2007 023 604

## Description

### BACKGROUND OF THE INVENTION

### Field of the Invention

The present invention relates generally to a tilting table for a machining center. More particularly, the present invention relates to a tilting table for a machining center capable of dispersing a load occurring in the tilting table and allowing easy maintenance thereof in such a way that tilting bodies of the tilting table are mounted in insertion holes formed in a body of the machining center.

### Description of the Related Art

Generally, a tilting table for a machining center is configured such that a rotary table capable of rotating 360° based on a rotary shaft (C shaft) is capable of tilting based on a tilting shaft (A shaft) within a predetermined angle range.

When this tilting table is fixed to a body of a machining center, in general, only lower ends of tilting bodies coupled to a rotation body are fixed to the body of the machining center.

However, when only the lower ends of the tilting bodies of the tilting table are fixed to the body of the machining center, it is problematic in that durability of the body of the machining center is considerably affected by operation of the tilting shaft.

Furthermore, it is also problematic in that high precision molding of the body of the machining center is required so as to precisely install the tilting bodies in the body of the machining center, and installation of the tilting table cannot be minutely controlled when the tilting table is mounted in the body of the machining center.

The EP 2 347 854 A1 discloses an assembly having a motor drive attached to another motor drive by a coupling arrangement so that the former drive is moved by the latter drive. The coupling arrangement has an adapter plate that is detachably attached to one of the drives. The adapter plate allows attachment of the former drive in two positions. A wall section runs in a direction of a longitudinal axis of an attachment part so that an axial pulling action is produced on the attachment part by a radial fixing part that is penetrated in a cavity.

The KR101 547 760 B1 discloses a tilting index table. The tilting index increases a delivery efficiency through a large torque, and performs an accurate position decision by minimizing the error as to deceleration rate of a high precision even though the tilting index table is manufactured in a compact size with a light weight, by using a harmonic decelerator comprising a wave generator, a flexible gear and an internal gear as a decelerator of a tiling unit.

The EP 2 347 854 A1 discloses a machine having stationary and lengthy bases provided beside inner sides of side walls of a machine frame, where the guide rails are fixed on the bases of a work piece-table assembly. Secondary parts of synchronized linear motors are fixed on the inner sides of the side walls, and primary parts of the linear motors are mounted vertically on body parts of the work piece-table assembly.

### Document of Related Art

(Patent Document 0001) Korean Patent No. 10-1193611 (Registered on Oct. 16, 2012)

### SUMMARY OF THE INVENTION

Accordingly, the present invention has been made keeping in mind the above problems occurring in the related art, and the present invention is intended to propose a tilting table for a machining center capable of dispersing a load occurring in the tilting table and allowing easy maintenance thereof.

The present invention is also intended to propose a tilting table for a machining center capable of improving precision in cutting of the machining center by easily ensuring durability of the body of the machining center.

The present invention is not limited to the above objects, and other objects of the present invention, which are not described, will be clearly understood from the following detailed description by those skilled in the art.

In order to achieve the above object, there is provided a tilting table for a machining center, according to appended claim 1.

The insertion holes may be formed on opposite side surfaces of the body of the machining center in a state where the insertion holes are open, and the brackets may be inserted into and may be fixed to the insertion holes, respectively.

Each of the insertion holes may be spaced apart from each of the brackets at a predetermined interval, and each of the brackets includes: a bracket fixing unit fixing each of the brackets to an inner circumference of each of the insertion holes.

According to the present invention, the bracket fixing unit includes: a fixing pin provided in a body of each of the brackets, the fixing pin protruding outside an outer surface of the body of each of the brackets toward the inner circumference of each of the insertion holes; an adjustment bolt provided in the body of each of the brackets, the adjustment bolt protruding outside the outer surface of the body of each of the brackets toward an outside of the opening of each of the insertion holes; and an adjustment wedge provided in the body of each of the brackets, the adjustment wedge rectilinearly moving forward and backward by rotation of the adjustment bolt so that the rectilinear movement of the adjustment wedge is transmitted to the fixing pin, in which the fixing pin may upwardly move by the rotation of the adjustment bolt so that the fixing pin is fixed to the inner circumference of each of the insertion holes.

The bracket fixing unit may be provided on each of upper, lower, left, and right parts of each of the brackets.

According to an embodiment of the present invention, it is advantageous as follows. A tilting table for a machining center according to the present invention can disperse a load occurring in the tilting table and allow easy maintenance thereof in such a way that tilting bodies of the tilting table are mounted in insertion holes formed in a body of the machining center.

Furthermore, the tilting table according to the present invention can improve precision in cutting of the machining center by easily ensuring durability of the body of the machining center.

Furthermore, the tilting table according to the present invention can reduce manufacturing costs of the machining center since when the tilting bodies are mounted in the body, installation of the tilting bodies can be minutely controlled by using a bracket fixing unit including an adjustment bolt and a fixing pin, and thus high precision molding of the body is not required.

### BRIEF DESCRIPTION OF THE DRAWINGS

The above and other objects, features and other advantages of the present invention will be more clearly understood from the following detailed description when taken in conjunction with the accompanying drawings, in which:
FIG. 1 is a view illustrating a tilting table for a machining center according to an embodiment of the present invention;
FIG. 2 is a schematic view illustrating the machining center using the tilting table according to the embodiment of the present invention;
FIG. 3 is a sectional view illustrating an internal structure of the tilting table according to the embodiment of the present invention; and
FIG. 4 is a sectional view illustrating an internal structure of a tilting body of the tilting table according to the embodiment of the present invention.

### DETAILED DESCRIPTION OF THE INVENTION

Terms used herein are selected as widely used terms at present. However, some of the terms are randomly selected by the applicant. In this case, some of the terms should be interpreted as having meanings that are consistent with their meanings in the context of the detailed description of the present invention.

Hereinbelow, exemplary embodiments of the present invention will be described in detail with reference to the accompanying drawings.

However, the present invention should not be limited thereto, and may be embodied in many different forms without departing from the scope of the present invention, as defined by the appended claims. Throughout the specification, the same reference symbols will refer to the same parts.

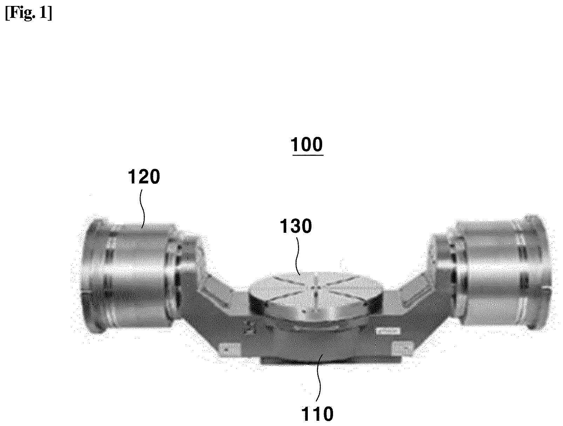

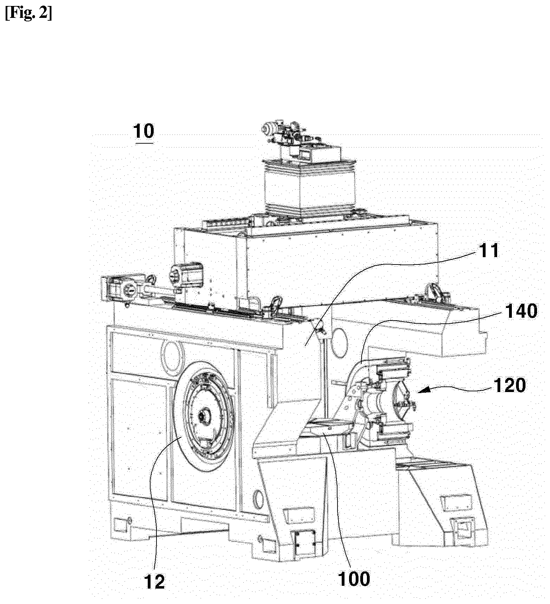

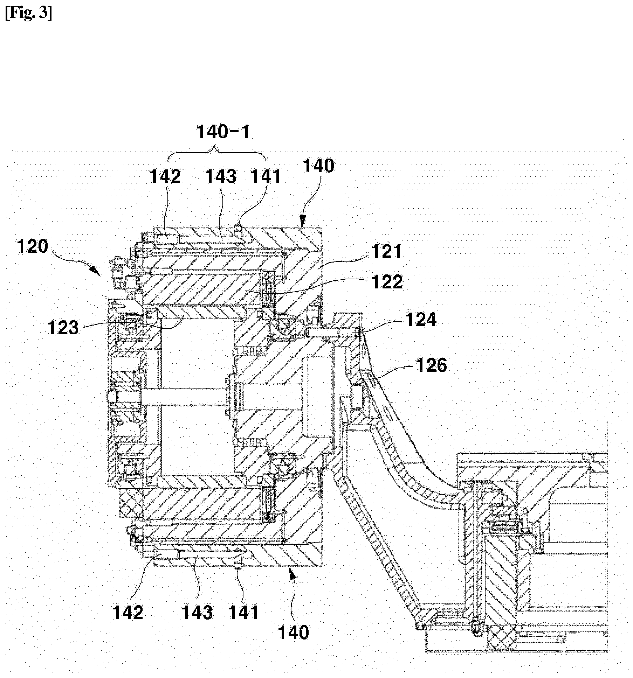

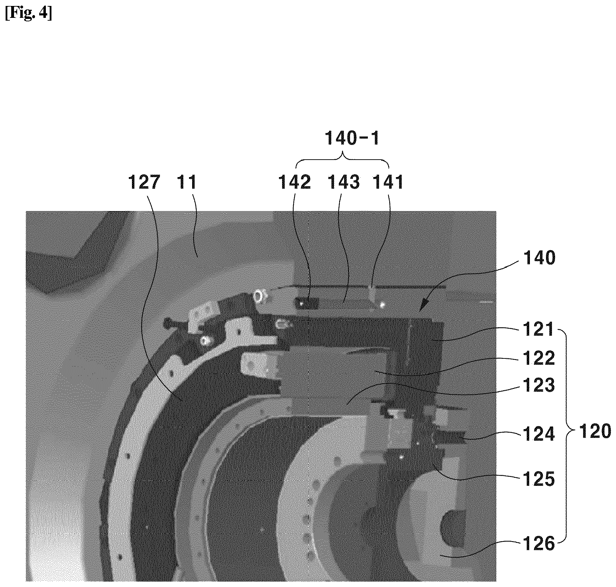

FIG. 1 is a view illustrating a tilting table for a machining center according to an embodiment of the present invention, FIG. 2 is a schematic view illustrating the machining center using the tilting table according to the embodiment of the present invention, FIG. 3 is a sectional view illustrating an internal structure of the tilting table according to the embodiment of the present invention, and FIG. 4 is a sectional view illustrating an internal structure of a tilting body of the tilting table according to the embodiment of the present invention.

Referring to FIGS. 1 and 2, the tilting table 100 according to the embodiment of the present invention generally includes: a rotation body 110; tilting bodies 120; a table 130; and brackets 140.

The rotation body 110 includes a rotary shaft (C shaft) capable of rotating 360°.

Each of the tilting bodies 120 includes a tilting shaft (A shaft) rotating within a predetermined angle range, and the tilting bodies 120 are provided at opposite sides of the rotation body 110, respectively.

The table 130 is provided on the rotation body 110 such that a workpiece is placed on the table 130. Further, the table 130 may rotate 360° by rotation of the rotary shaft (C shaft).

The tilting table 100 is installed in a body 11 of the machining center 10. In this case, the tilting shaft (A shaft) moves in forward and backward directions, or in left and right directions within a predetermined angle range, and the rotary shaft (C shaft) rotates 360°. Further, a workpiece is fixed to the table 130 by using a clamping device, and the workpiece is cut by using a rotating cutter coupled to a main shaft of the machining center 10.

In this case, in the embodiment of the present invention, the brackets 140 are provided so as to surround outer circumferential surfaces of the tilting bodies 120, respectively. Further, the brackets 140 are mounted in insertion holes 12 formed in the body 11 of the machining center 10, respectively. That is, when the tilting bodies 120 are mounted in the body 11 of the machining center 10, the tilting bodies 120 are inserted into the insertion holes 12 formed in the body 11 of the machining center 10 instead of mounting only a part of each of the tilting bodies 120 to the body 11 of the machining center 10.

Referring to FIG. 2, the insertion holes 12 are formed on opposite side surfaces of the body 11 of the machining center 10 in a state where the insertion holes 12 are open, and the brackets 140 are inserted into and are fixed to the insertion holes 12, respectively.

In this case, each of the insertion holes 12 is spaced apart from each of the brackets 140 at a predetermined interval (approximately 3 mm), and each of the brackets 140 is fixed to an inner circumference of each of the insertion holes 12 by using a bracket fixing unit 140-1.

Referring to FIGS. 3 and 4, each of the insertion holes 12 is spaced apart from each of the brackets 140 at the predetermined interval, and each of the brackets is fixed to the inner circumference of each of the insertion holes 12 by using the bracket fixing unit 140-1.

The bracket fixing unit 140-1 includes: a fixing pin 141; an adjustment bolt 142; and an adjustment wedge 143.

The fixing pin 141 is provided in a body of each of the brackets 140 such that the fixing pin 141 protrudes outside an outer surface of the body of each of the brackets 140 toward the inner circumference of each of the insertion holes 12.

The adjustment bolt 142 is provided in the body of each of the brackets 140 such that the adjustment bolt 142 protrudes outside the outer surface of the body of each of the brackets 140 toward an outside of the opening of each of the insertion holes 12.

The adjustment wedge 143 is provided in the body of each of the brackets 140, and the adjustment wedge 143 is connected to the adjustment bolt 142 and the fixing pin 141 so as to transmit power from the adjustment bolt 142 to the fixing pin 141. That is, the adjustment wedge 143 is configured such that the adjustment wedge 143 rectilinearly moves forward and backward by rotation of the adjustment bolt 142, and the rectilinear movement of the adjustment wedge 143 is transmitted to the fixing pin 141.

Consequently, when the adjustment bolt 142 is fastened, the fixing pin 141 upwardly moves by the rotation of the adjustment bolt 142 and the rectilinear movement of the adjustment wedge 143. Thus, each of the brackets 140 is fixed to the inner circumference of each of the insertion holes 12 by the fixing pin 141 upwardly moving.

The bracket fixing unit 140-1 may be provided in plural whereby the plurality of bracket fixing units 140-1 may be installed at appropriate positions of each of the brackets 140 as desired. In the embodiment, the plurality of bracket fixing units 140-1 is provided at four positions, such as upper, lower, left, and right parts, of each of the brackets 140, so as to fix each of the brackets 140 to each of the insertion holes 12 formed in the body 11.

Meanwhile, according to an internal structure of each of the brackets 140, a housing 121 is fixed inside each of the brackets 140, a stator 122 is fixed inside the housing 121 by using a plunge 127, and a rotor 123 and an adaptor 125 are inserted into the stator 122. The internal structure of each of the brackets 140 constitutes each of the tilting bodies 120.

Each of the tilting bodies 120 is mounted to a cradle 126 by using a fixing bolt 124, thereby being connected to the rotation body 110.

As described, in the tilting table 100 of the present invention, the tilting bodies 120 are fixed to the insertion holes 12 formed in the body 11 of the machining center 10, respectively, so that a load occurring in the tilting table 100 can be dispersed and easy maintenance of the tilting table 100 can be allowed. Furthermore, the bracket fixing unit 140-1 including the adjustment bolt and the fixing pin is provided in plural so that the tilting bodies 120 can be easily mounted in the body 11 of the machining center 10 and installation of the tilting bodies 120 can be minutely controlled.

Although a preferred embodiment of the present invention has been described for illustrative purposes, the scope and spirit of the present invention are not limited thereto and those skilled in the art will appreciate that various modifications, additions and substitutions are possible, without departing from the scope of the present invention as disclosed in the accompanying claims.

## Claims

1. A tilting table (100) for a machining center (11), the tilting table (100) comprising:
a rotation body (110) including a rotary shaft that rotates;
tilting bodies (120) provided at opposite sides of the rotation body (110), respectively, each of the tilting bodies (120) including a tilting shaft rotating within a predetermined angle range;
a table (130) provided on the rotation body (110) such that a workpiece can be placed on the table (130); and
brackets (140) adapted to be mounted in insertion holes (12) formed in a body (10) of the machining center (11), the brackets (140) surrounding the tilting bodies (120), respectively; each of the brackets (140) including:
a bracket fixing unit (140-1) for fixing each of the brackets (140) to an inner circumference of each of the insertion holes (12), **characterized in that** the bracket fixing unit (140-1) includes:
a fixing pin (141) provided in a body of each of the brackets (140), the fixing pin (141) protruding outside an outer surface of the body of each of the brackets (140) toward the inner circumference of each of the insertion holes (12);
an adjustment bolt (142) provided in the body of each of the brackets (140), the adjustment bolt (142) protruding outside the outer surface of the body of each of the brackets (140) toward an outside of the opening of each of the insertion holes (12); and
an adjustment wedge (143) provided in the body of each of the brackets (140), the adjustment wedge (143) rectilinearly moving forward and backward by rotation of the adjustment bolt (142) so that the rectilinear movement of the adjustment wedge (143) is transmitted to the fixing pin (141), wherein
the fixing pin (141) upwardly moves by the rotation of the adjustment bolt (142) so that the fixing pin (141) is fixed to the inner circumference of each of the insertion holes (12).

2. The tilting table (100) of claim 1, wherein
the insertion holes (12) are formed on opposite side surfaces of the body (10) of the machining center (11) in a state where the insertion holes (12) are open, and the brackets (140) are adapted to be inserted into and fixed to the insertion holes (12), respectively.

3. The tilting table of claim 1 or 2, wherein
each of the insertion holes (12) is spaced apart from each of the brackets (140) at a predetermined interval.

4. The tilting table (100) of anyone of the claims 1 to 3, wherein
the bracket fixing unit (140-1) is provided on each of upper, lower, left, and right parts of each of the brackets (140).

## Patentansprüche

1. Schwenktisch (100) für ein Bearbeitungszentrum (11), wobei der Schwenktisch (100) aufweist:
einen Rotationskörper (110) mit einer Rotationswelle, die sich dreht;,
Schwenkkörper (120), die jeweils an gegenüberliegenden Seiten des Rotationskörpers (110) vorgesehen sind, wobei jeder der Schwenkkörper (120) eine Schwenkwelle aufweist, die sich innerhalb eines vorbestimmten Winkelbereichs dreht,
einen Tisch (130), der auf dem Rotationskörper (110) auf eine solche Weise vorgesehen ist, dass ein Werkstück auf dem Tisch (130) platziert werden kann, und
Halterungen (140), die ausgebildet sind, in Einführöffnungen (12) angebracht zu werden, die in einem Körper (10) des Bearbeitungszentrums (11) ausgebildet sind, wobei die Halterungen (140) die Schwenkkörper (120) jeweils umgeben, wobei jede der Klammern (140) aufweist:
eine Klammerbefestigungseinheit (140-1) zum Befestigen jeder der Klammern (140) an einem inneren Umfang von jeder der Einführöffnungen (12), **dadurch gekennzeichnet, dass** die Klammerbefestigungseinheit (140-1) aufweist:
einen Fixierstift (141), der in einem Körper von jeder der Klammern (140) vorgesehen ist, wobei der Fixierstift (141) außerhalb einer äußeren Oberfläche des Körpers von jeder der Klammern (140) in Richtung auf den inneren Umfang von jeder der Einführöffnungen (12) vorsteht,
einen Einstellbolzen (142), der in dem Körper von jeder der Klammern (140) vorgesehen ist, wobei der Einstellbolzen (142) außerhalb der äußeren Oberfläche des Körpers von jeder der Klammern (140) in Richtung auf eine Außenseite der Öffnung von jeder der Einführöffnungen (12) vorsteht, und
einen Einstellkeil (143), der in dem Körper von jeder der Klammern (140) vorgesehen ist, wobei sich der Einstellkeil (143) durch eine Drehung des Einstellbolzens (142) auf eine solche Weise geradlinig vor und zurück bewegt, dass die geradlinige Bewegung des Einstellkeils (143) auf den Fixierstift (141) übertragen wird, wobei
der Fixierstift (141) sich durch die Drehung des Einstellbolzens (142) auf eine solche Weise aufwärts bewegt, dass der Fixierstift (141) an dem inneren Umfang von jeder der Einführöffnungen (12) befestigt ist.

2. Schwenktisch (100) nach Anspruch 1, wobei
die Einführöffnungen (12) an gegenüberliegenden Seitenflächen des Körpers (10) des Bearbeitungszentrums (11) in einem Zustand ausgebildet sind, in dem die Einführöffnungen (12) offen sind, und die Klammern (140) ausgebildet sind, eingeführt und an den Einführöffnungen (12) befestigt zu werden.

3. Schwenktisch nach Anspruch 1 oder 2, wobei
jeder der Einführöffnungen (12) in einem vorbestimmten Abstand von jeder der Klammern (140) beabstandet ist.

4. Schwenktisch (100) nach einem der Ansprüche 1 bis 3, wobei
die Klammerbefestigungseinheit (140-1) an jedem der oberen, unteren, linken und rechten Teile jeder der Klammern (140) vorgesehen ist.

## Revendications

1. Table de basculement (100) pour un centre d'usinage (11), la table de basculement (100) comprenant :
un corps de rotation (110) comprenant un arbre rotatif qui est en rotation ;
des corps de basculement (120) disposés sur des côtés opposés du corps de rotation (110), respectivement, chacun des corps de basculement (120) comprenant un arbre de basculement tournant dans une plage angulaire prédéterminée ;
une table (130) disposée sur le corps de rotation (110) de telle sorte qu'une pièce à usiner peut être placée sur la table (130) ; et
des supports (140) conçus pour être montés dans des trous d'insertion (12) formés dans un corps (10) du centre d'usinage (11), les supports (140) encerclant les corps de basculement (120), respectivement ; chacun des supports (140) comprenant :
une unité de fixation de support (140-1) pour fixer chacun des supports (140) sur une circonférence interne de chacun des trous d'insertion (12), **caractérisée en ce que** l'unité de fixation de support (140-1) comprend :
une broche de fixation (141) disposée dans un corps de chacun des supports (140), la broche de fixation (141) faisant saillie à l'extérieur d'une surface externe du corps de chacun des supports (140) en direction de la circonférence interne de chacun des trous d'insertion (12) ;
un boulon de réglage (142) disposé dans le corps de chacun des supports (140), le boulon de réglage (142) faisant saillie à l'extérieur de la surface externe du corps de chacun des supports (140) en direction d'un extérieur de l'ouverture de chacun des trous d'insertion (12) ; et
une clavette de réglage (143) disposée dans le corps de chacun des supports (140), la clavette de réglage (143) se déplaçant de manière rectiligne vers l'avant et vers l'arrière par la rotation du boulon de réglage (142) de telle sorte que le mouvement rectiligne de la clavette de réglage (143) est transmis à la broche de fixation (141), dans laquelle
la broche de fixation (141) se déplace vers le haut par la rotation du boulon de réglage (142) de telle sorte que la broche de fixation (141) est fixée sur la circonférence interne de chacun des trous d'insertion (12).

2. Table de basculement (100) selon la revendication 1, dans laquelle
les trous d'insertion (12) sont formés sur des surfaces latérales opposées du corps (10) du centre d'usinage (11) dans un état où les trous d'insertion (12) sont ouverts, et les supports (140) sont conçus pour être insérés dans les trous d'insertion (12) et fixés sur ceux-ci, respectivement.

3. Table de basculement selon la revendication 1 ou 2, dans laquelle
chacun des trous d'insertion (12) est espacé de chacun des supports (140) par un intervalle prédéterminé.

4. Table de basculement (100) selon l'une quelconque des revendications 1 à 3, dans laquelle
l'unité de fixation de support (140-1) est disposée sur chacune des parties supérieure, inférieure, gauche et droite de chacun des supports (140).
